# EUROPEAN PATENT APPLICATION

(11) **EP 1 834 903 A2**
(43) Date of publication of application: **19.09.2007**
(21) Application number: 07103691.7
(22) Date of filing: 07.03.2007
(51) Int. Cl.: B65G 1/04

(54) **Handling apparatus for carrying vehicular tires to and from a storage shelf or the like**

(30) Priority: 15.03.2006 FI 20065166
(71) Applicant: Korpela, Juha, 04430 Järvenpää (FI)
(72) Inventor: Korpela, Juha, 04430 Järvenpää (FI)
(74) Representative: LEITZINGER OY

(57) **Abstract**

The invention relates to a handling apparatus for carrying vehicular tires (9) to and from a storage shelf or the like, said apparatus comprising a manually operated or drive-motor equipped hoisting assembly, which is provided with lifting elements for lifting a tire to a desired height for a storage shelf or the like. The handling apparatus comprises an accessory (10), which includes a chassis member (6) coupled with the hoisting assembly's lifting elements, and a traversing table (7), which is adapted to rotate about a rotation axis that is substantially vertical relative to the chassis member and which is capable of turning from a middle position pointing substantially in the longitudinal direction of the hoisting assembly to a position pointing in either lateral direction of the hoisting assembly. The traversing table (7) is provided with carry-over elements (2) for moving the tire (9) in a substantially upright condition from a position outside the traversing table to a position on top of the traversing table and vice versa.

## Description

The present invention relates to a handling apparatus for carrying vehicular tires to and from a storage shelf or the like, said apparatus comprising a manually operated or drive-motor equipped hoisting assembly, which is provided with lifting elements for lifting a tire to a desired height for a storage shelf or the like.

There are prior known hoisting assemblies capable of lifting passenger car tires in a horizontal position by means of a relatively small-size lifting device, which is small enough to make a turn in an aisle space less than e.g. 1500 mm in breadth to face directly a storage shelf or the like for lifting the tires onto the storage shelf. Passenger car tires are normally sufficiently lightweight in terms of the mass thereof to enable handling the same in packages of e.g. four stacked tires without applying too much stress on the lowermost tire of a tire package. On the other hand, the tires of more heavy-duty vehicles, such as trucks, buses and various working vehicles, are typically excessively heavy to be stacked in a horizontal position on top of each other and, instead, must be set in an upright storage position, since e.g. truck tires, along with the rims thereof, may have a weight within the range of 100-200 kg. Accordingly, the shelf tops in a storage rack or the like are typically assembled from supporting beams or the like, which are placed at the front edge and at the rear edge, leaving a vacant interspace for accommodating the bottom portion of an upright tire bearing against said beams by the front and back edges of its bottom portion. In addition, truck tires are typically 1050 mm in diameter, requiring a remarkably roomy aisle space, e.g. an aisle space of 2,5 m or more in breadth, for enabling the lifting thereof onto a storage shelf by means of a hoisting device movable directly face-to-face with the storage shelf. The handling of such relatively bulky and heavy-duty tires has also presented occasional problems in terms of safety at work. Thus, an objective of the present invention is to provide a handling apparatus, particularly for carrying quite heavy-duty vehicular tires to a storage shelf or the like, which is operable in a relatively narrow aisle space of e.g. less than 1500 mm and which at the same time provides a major improvement in occupational safety by virtue of the reliable handling of heavy-duty tires. In order to accomplish this objective, a handling apparatus of the invention is characterized in that the handling apparatus comprises an accessory, which includes a chassis member coupled with the hoisting assembly's lifting elements, and a traversing table, which is adapted to rotate about a rotation axis that is substantially vertical relative to the chassis member and which is capable of turning from a middle position pointing substantially in the longitudinal direction of the hoisting assembly to a position pointing in either lateral direction of the hoisting assembly, and in that the traversing table is provided with carry-over elements for moving the tire in a substantially upright condition from a position outside the traversing table to a position on top of the traversing table and vice versa.

The handling apparatus is preferably a separate accessory, which is attached to the lifting elements, such as the lifting prongs of a hoisting assembly, e.g. a forklift or a manually operated less heavy-duty hoisting assembly, or it can also be provided as an integral part of the hoisting assembly. By virtue of a traversing table included in the accessory, the hoisting assembly only needs to travel forward or backward in an aisle space and the accessory handles the transfer of tires onto or from a storage shelf present on either side by turning to face the storage shelf. The traversing table can be adapted to turn e.g. 180° from a position facing in one lateral direction of the hoisting assembly to a position facing in the opposite lateral direction, enabling the handling of tires on either side of the hoisting assembly and also directly in front of the hoisting assembly. The traversing table can also be adapted to turn not more than 90° from a directly forward facing position to a position facing either side, e.g. if the arrangement of storage shelves is such that picking up tires is always performed from one side only.

The invention will now be described more closely with reference to the accompanying drawings, in which:
- fig. 1: shows in a side view one embodiment for an accessory of the invention, and
- fig. 2: shows the accessory of fig. 1 in a plan view.

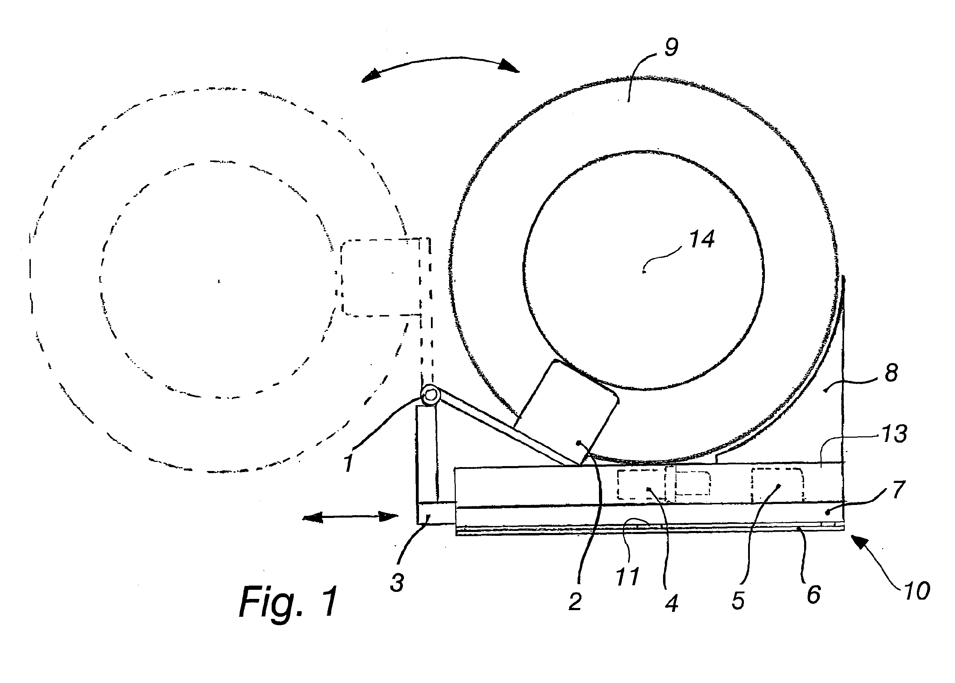

The handling apparatus according to the invention comprises an accessory, which is designated generally by reference numeral 10 and which is preferably a separate device to be coupled with a hoisting assembly's lifting elements (not shown), thus enabling its use with a variety of hoisting assemblies as necessary. The accessory can also be designed as an integral part of the hoisting assembly. The accessory 10 comprises a lower chassis member 6, which is intended for attachment to the hoisting assembly's lifting elements either temporarily or permanently. On top of the chassis member 6 and rotatably with respect to the chassis member is mounted a traversing table 7, which is rotatable in a substantially horizontal position about a pivot point 11 from a middle position pointing in the longitudinal direction of the hoisting assembly to a position pointing in either lateral direction. In the illustrated embodiment, the traversing table 7 is provided with a telescopic extension 3. In the illustrated embodiment, the extension 3 is provided with gripping means designed as bracket-like gripping jaws 2 for taking hold of a tire 9. The gripping jaws 2 are preferably provided with a hydraulic actuator (not shown) for clamping the same against the side faces of the tire 9 for taking hold of the tire. The gripping jaws 2 are adapted to pivot about a horizontal axle 1 between a forward facing position and a rearward reclined position, said pivoting action being preferably effected by a hydraulic actuator (not shown). The tire 9 is lifted by means of the gripping jaws 2 along a substantially arcuate path from a position outside the traversing table, shown by dash line in fig. 1, to a position on top of the traversing table, shown by solid line in fig. 1, and vice versa. In addition, the traversing table 7 is preferably provided with a positioning stopper 8, which enables the tire 9, when on top of the accessory, to settle essentially at the longitudinal center of the accessory, at which the longitudinal center of a tire substantially coincides with the longitudinal center of the traversing table 7, whereby a tire presently on top of the accessory is balanced as well as possible without applying excessive lateral stresses on the hoisting assembly. The positioning stopper 8 can be designed to be adjustable, such that the accessory 10 is applicable for carrying tires of multiple sizes as the tires will be set in a central position by appropriate adjustment of the positioning stopper.

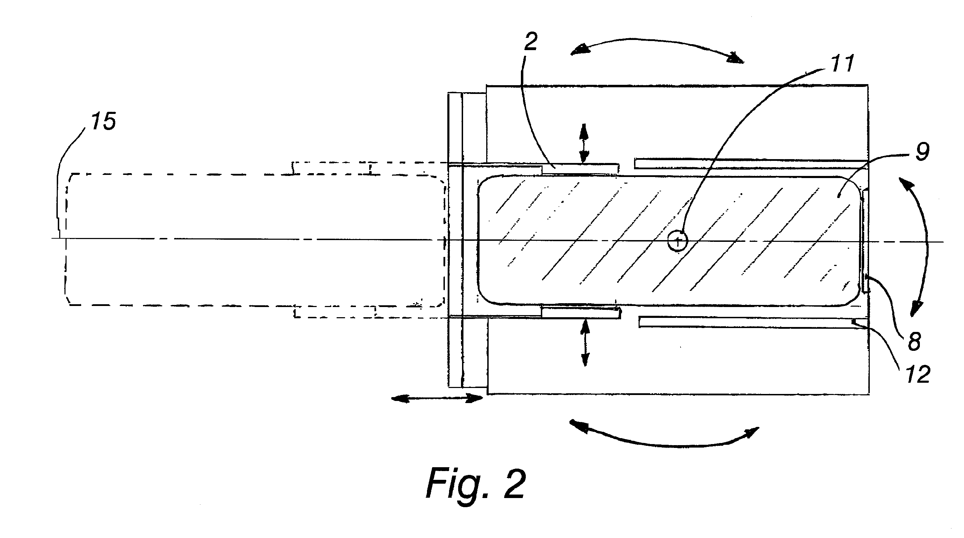

The pivot point between the traversing table 7 and the chassis member 6 is preferably located at the longitudinal mid-point of the traversing table, whereby the tire 9 has its center 14 substantially coincident with the pivot point 11. The gripping jaws 2, in turn, serve to align the tire symmetrically relative to a longitudinal center line 15 of the accessory. The traversing table is preferably also provided with side brackets 12 (Fig. 2) for preventing the tire from falling off the traversing table. The side brackets 12 and the positioning stopper 8 can also be conceivably designed as an integral trough-like structure.

The traversing table is preferably provided with an enclosure element 13, inside which can be located a power source required by the apparatus, e.g. a batter 5, as well as e.g. a hydraulic mechanism 4 and other necessary components. The apparatus can be further provided with wireless remote control, enabling the hoisting assembly operator to operate directly from the hoisting assembly, whereby no physical link, such as e.g. hydraulic lines or power cables, is not needed between the hoisting assembly and the accessory.

The solution of the invention is applicable not only to the handling of truck tires but also other heavy-duty tires and, of course, it is also useful for handling lighter-weight passenger car tires whenever it is desirable to store these in an upright position.

## Claims

1. A handling apparatus for carrying vehicular tires (9) to and from a storage shelf or the like, said apparatus comprising a manually operated or drive-motor equipped hoisting assembly, which is provided with lifting elements for lifting a tire to a desired height for a storage shelf or the like, **characterized in that** the handling apparatus comprises an accessory (10), which includes a chassis member (6) coupled with the hoisting assembly's lifting elements, and a traversing table (7), which is adapted to rotate about a rotation axis that is substantially vertical relative to the chassis member and which is capable of turning from a middle position pointing substantially in the longitudinal direction of the hoisting assembly to a position pointing in either lateral direction of the hoisting assembly, and
**in that** the traversing table (7) is provided with carry-over elements (2) for moving the tire (9) in a substantially upright condition from a position outside the traversing table to a position on top of the traversing table and vice versa.

2. A handling apparatus as set forth in claim 1, **characterized in that** the carry-over elements (2) are provided on a telescopically working extension (3) of the traversing table (7).

3. A handling apparatus as set forth in claim 1 or 2, **characterized in that** the accessory's carry-over elements comprise substantially vertically disposed bracket-like gripping jaws (2), which are engageable against the side faces of the tire (9).

4. A handling apparatus as set forth in claim 3, **characterized in that** the gripping jaws (2) are pivotable about a substantially horizontal axle (1) between a forward facing position and a rearward reclined position for moving a tire clamped therebetween from a position outside the traversing table onto the traversing table along an arcuate lifting path.

5. A handling apparatus as set forth in claim 3 or 4, **characterized in that** the accessory is provided with hydraulic actuators for clamping the gripping jaws (2) against the side faces of a tire and/or for pivoting the same about said substantially horizontal axle (1).

6. A handling apparatus as set forth in any of the preceding claims, **characterized in that** the accessory is provided with a positioning stopper (8) capable of setting the tire (9) in a substantially central position in the longitudinal direction of the traversing table (7).

7. A handling apparatus as set forth in claim 1 or 2, **characterized in that** the carry-over elements are adapted to set the tire in a substantially central position in the lateral direction of the traversing table (7).

8. A handling apparatus as set forth in any of claims 1-7, **characterized in that** the accessory is a separate device capable of being removably attached to the hoisting assembly's lifting elements.

9. A handling apparatus as set forth in any of claims 1-7, **characterized in that** the accessory is provided as an integrated part of the hoisting assembly.
